# EUROPEAN PATENT SPECIFICATION

(11) **EP 4 174 847 B1**
(45) Date of publication and mention of the grant of the patent: **18.09.2024**
(21) Application number: 22789144.7
(22) Date of filing: 28.02.2022
(51) Int. Cl.: G01C 21/00, G10L 15/22, G10L 15/26, G10L 15/08, G10L 25/51

(54) **NAVIGATION BROADCAST DETECTION METHOD AND APPARATUS, AND ELECTRONIC DEVICE AND MEDIUM**
VERFAHREN UND VORRICHTUNG ZUR ERKENNUNG VON NAVIGATIONSRUNDFUNK SOWIE ELEKTRONISCHE VORRICHTUNG UND MEDIUM
PROCÉDÉ ET APPAREIL DE DÉTECTION DE DIFFUSION DE NAVIGATION, ET DISPOSITIF ÉLECTRONIQUE ET SUPPORT

(30) Priority: 25.06.2021 CN 202110713371
(43) Date of publication of application: 03.05.2023
(73) Proprietor: BEIJING BAIDU NETCOM SCIENCE TECHNOLOGY CO., LTD., Beijing 100085 (CN)
(72) Inventor: NING, Liangliang, Beijing 100085 (CN); ZHU, Hongfei, Beijing 100085 (CN); YANG, Peng, Beijing 100085 (CN)
(74) Representative: Deambrogi, Edgardo
(86) International application number: PCT/CN2022/078165
(87) International publication number: WO 2022/267514

(56) References cited:
- WO-A1-2011/092244
- CN-A- 106 411 447
- CN-A- 106 949 902
- CN-A- 107 764 266
- CN-A- 107 990 908
- CN-A- 112 683 294
- CN-A- 113 450 794
- US-A- 5 612 881

## Description

### TECHNICAL FIELD

The present disclosure relates to the field of computer technology and the fields of intelligent transportation technology, cloud computing technology and cloud service technology, for example, a navigation broadcast detection method and apparatus, an electronic device, and a medium.

### BACKGROUND

With the development of people's economic level, more and more people take private car travel as their first choice for travel. In this environment, map software is born so that car owners can plan the driving routes according to navigation broadcast of the map software.

The immediacy of the navigation broadcast is particularly important for the car owners. The real-time detection of the navigation broadcast of the map software mostly relies on manual on-site road testing. Further relevant technologies are also known from CN 107764266 A which provides an indoor combined navigation simulation method and system, a navigation device, a terminal and a memory and US 5612 881 A which provides a vehicle navigation system including a simulated run mode along with a normal navigation mode.

### SUMMARY

The invention is set out in the appended set of claims.

### BRIEF DESCRIPTION OF DRAWINGS

FIG. 1 is a flowchart of a navigation broadcast detection method according to an embodiment of the present disclosure;
FIG. 2 is a flowchart of another navigation broadcast detection method according to an embodiment of the present disclosure;
FIG. 3 is a structural diagram of a navigation broadcast detection apparatus according to an embodiment of the present disclosure; and
FIG. 4 is a block diagram of an electronic device for implementing a navigation broadcast detection method according to an embodiment of the present disclosure.

### DETAILED DESCRIPTION

Example embodiments of the present disclosure, including details of embodiments of the present disclosure, are described hereinafter in conjunction with the drawings to facilitate understanding. The example embodiments are illustrative only. Description of well-known functions and constructions and description of functions and constructions with low relevance to the embodiments described below are omitted hereinafter for clarity and conciseness.

A method for detecting navigation broadcast information of map software is as follows: an inspector carries a smart device installed with the map software to be detected, conducts road testing on a real road, such as driving a car, walking or cycling, compares an actual road condition with navigation broadcast when the map software performs the navigation broadcast, and subjectively gives an immediate detection result of the navigation broadcast of the map to be detected.

In this detection method, a manual method is needed to perform the on-site road testing, resulting the relatively high detection cost and relatively low detection efficiency.

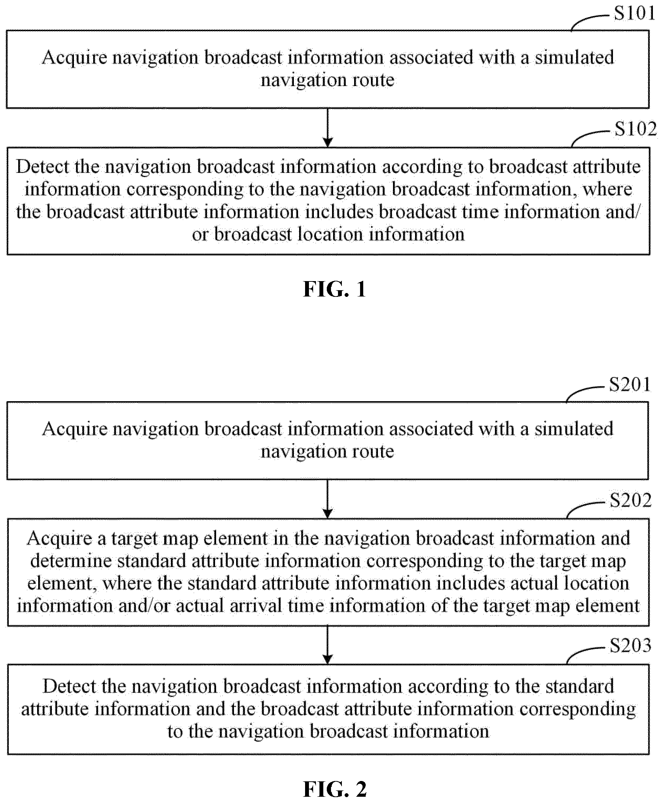

FIG. 1 is a flowchart of a navigation broadcast detection method according to an embodiment of the present disclosure. This embodiment is applicable to the case of detecting the immediacy of navigation broadcast information. The method in this embodiment may be performed by a navigation broadcast detection apparatus according to an embodiment of the present disclosure. The apparatus may be implemented by software and/or hardware and integrated in any electronic device having a computing capability.

As shown in FIG. 1, the navigation broadcast detection method according to this embodiment may include steps described below.

In S101, navigation broadcast information associated with a simulated navigation route is acquired.

The simulated navigation route is a simulated route obtained through route simulation performed by target map software. The target map software is a software installed in the electronic device and has a navigation function. The electronic device includes, but is not limited to, a car machine, a smart phone, a smart watch or a tablet computer and other devices equipped with intelligent systems. The navigation broadcast information is navigation information broadcasted by the target map software during a navigation process, such as "there is the XX intersection ahead, please turn left" or "there is a traffic camera ahead, please pay attention". The type of the navigation broadcast information may be voice broadcast information, or text broadcast information, or a combination of the voice broadcast information and the text broadcast information.

In an embodiment, the technician acquires target road network data in advance according to a route selection principle of the on-site road testing, plans the route by using the target map software based on the target road network data, and simulates and generates the simulated navigation route of a user at a fixed speed, that is, the user moves at a constant speed in the simulated navigation route. When the navigation starts, the target map software broadcasts the navigation broadcast information according to a location of the user in the simulated navigation route and based on a preset broadcast strategy, until the location of the user is at an end point of the simulated navigation route. Moreover, during the navigation process, the navigation broadcast information associated with the simulated navigation route is also collected. For example, the voice broadcast information associated with the simulated navigation route is collected through a sound pickup device. For another example, the voice broadcast information associated with the simulated navigation route is collected through screen recording. For another example, the text broadcast information associated with the simulated navigation route is collected through optical character recognition technology. After the collection is completed, the simulated navigation route and the associated navigation broadcast information are bound. When the navigation broadcast information associated with any simulated navigation route needs to be detected, the navigation broadcast information associated with this simulated navigation route is acquired according to identification information and a binding relationship of this simulated navigation route.

The navigation broadcast information associated with the simulated navigation route is acquired, thereby laying a data foundation for the subsequent detection of the navigation broadcast information.

In S102, the navigation broadcast information is detected according to broadcast attribute information corresponding to the navigation broadcast information, where the broadcast attribute information includes broadcast time information and/or broadcast location information.

The broadcast time information indicates a time node when the target map software performs the navigation broadcast. For example, the target map software performs the navigation broadcast at "1 minute", "10 minutes" and "15 minutes" so that "1 minute", "10 minutes" and " 15 minutes" are the broadcast time information corresponding to the navigation broadcast information, respectively. The broadcast location information indicates location coordinates of the user when the target map software performs the navigation broadcast. For example, the target map software performs the navigation broadcast when the locations of the user are "115, 40", "120, 45" and "110, 35", respectively so that "115, 40", "120, 45" and "110, 35" are the broadcast location information corresponding to the navigation broadcast information, respectively.

In an embodiment, in the case where the navigation broadcast information is the voice broadcast information, an audio feature of each piece of voice broadcast information is recognized, and a moment when the audio feature of the piece of voice broadcast information is recognized is used as the broadcast time information corresponding to the piece of voice broadcast information; and in the case where the navigation broadcast information is the text broadcast information, a moment when each piece of text broadcast information starts to be displayed is used as the broadcast time information corresponding to the piece of text broadcast information. After the broadcast time information corresponding to the navigation broadcast information is determined, the corresponding location of the user when a timestamp is broadcast time is determined according to a pre-established correspondence between the location of the user and the timestamp, and the location of the user is used as the broadcast location information corresponding to the navigation broadcast information. The location of the user includes, but is not limited to, Global Positioning System (GPS) coordinates of the user.

After the broadcast attribute information corresponding to each piece of navigation broadcast information is acquired, a map element included in each piece of navigation broadcast information is determined, and the navigation broadcast information is detected according to actual location information and/or actual arrival time information of the map element in conjunction with the broadcast time information and/or the broadcast location information of the navigation broadcast information.

The map element included in each piece of navigation broadcast information is determined, the actual location information of the map element is determined according to a geographic information database, the actual arrival time information of the map element is determined according to the actual location information and a preset moving speed of the user in the simulated navigation route, and the actual location information is compared with the broadcast location information. If it is detected that a broadcast location of the navigation broadcast information is behind an actual location of the map element along a direction of the simulated navigation route, it is determined that abnormal navigation broadcast exists in this piece of navigation broadcast information; and if it is detected that along the direction of the simulated navigation route, the broadcast location of the navigation broadcast information is before the actual location of the map element and a distance between the broadcast location and the actual location is greater than a first set value or less than a second set value, it is determined that abnormal navigation broadcast exists in this piece of navigation broadcast information. The first set value and the second set value are empirical values, and the first set value is greater than the second set value.

Alternatively, the actual arrival time information is compared with the broadcast time information. If the broadcast time lags behind the actual arrival time, it is determined that abnormal navigation broadcast exists in this piece of navigation broadcast information; and if the broadcast time is earlier than the actual arrival time and a time difference between the broadcast time and the actual arrival time is greater than a third set value or less than a fourth set value, it is determined that abnormal navigation broadcast exists in this piece of navigation broadcast information. The third set value and the fourth set value are empirical values, and the third set value is greater than the fourth set value.

Alternatively, the actual location information is compared with the broadcast location information, and the actual arrival time information is compared with the broadcast time information. If it is detected that along the direction of the simulated navigation route, the broadcast location of the navigation broadcast information is behind the actual location of the map element or the broadcast time lags behind the actual arrival time, it is determined that abnormal navigation broadcast exists in this piece of navigation broadcast information; and if it is detected that along the direction of the simulated navigation route, the broadcast location information of the navigation broadcast information is before the actual location of the map element, the broadcast time is earlier than the actual arrival time, and the distance between the broadcast location and the actual location is greater than the first set value or less than the second set value, or the time difference between the broadcast time and the actual arrival time is greater than the third set value or less than the fourth set value, then it is determined that abnormal navigation broadcast exists in this piece of navigation broadcast information. The first set value, the second set value, the third set value, and the fourth set value are empirical values; and the first set value is greater than the second set value, and the third set value is greater than the fourth set value.

The navigation broadcast information is detected according to the broadcast attribute information corresponding to the navigation broadcast information, thereby achieving an effect of automatically detecting the navigation broadcast information.

In the present disclosure, the navigation broadcast information associated with the simulated navigation route is acquired, and the navigation broadcast information is detected according to the broadcast attribute information corresponding to the navigation broadcast information; where the broadcast attribute information includes the broadcast time information and/or the broadcast location information. In this manner, the immediacy of navigation broadcast information is automatically detected without the need for manual on-site road testing, thereby improving the detection efficiency of the navigation broadcast information and reducing the detection cost; and the map software is optimized through guidance of the detection result, thereby accelerating the iterative efficiency of the map software and improving the user experience.

FIG. 2 is a flowchart of another navigation broadcast detection method according to an embodiment of the present disclosure. An extension is performed based on the preceding technical solution and may be combined with the preceding optional embodiments.

As shown in FIG. 2, the navigation broadcast detection method according to this embodiment may include steps described below.

In S201, navigation broadcast information associated with a simulated navigation route is acquired.

In S202, a target map element in the navigation broadcast information is acquired and standard attribute information corresponding to the target map element is determined, where the standard attribute information includes actual location information and/or actual arrival time information of the target map element.

The target map element is a road network object and is the basic content of the map. In this embodiment, the target map element mainly refers to a geographic element, that is, a main body of map content, such as traffic lights, a traffic camera for traffic violation, a GPS radar detector (E-Dog), a speed measuring point, a road crossing, a building, and a tunnel. The actual location information refers to real location coordinates of the target map element in a world coordinate system, such as GPS coordinates. The actual arrival time information refers to estimated time when the user passes the target map element in the simulated navigation route.

In an embodiment, the target map element included in each piece of navigation broadcast information is recognized according to a preset entity recognition algorithm, or the target map element included in each piece of navigation broadcast information is obtained through matching according to a string matching algorithm, such as regular expressions, hash retrieval, or the Knuth-Morris-Pratt (KMP) algorithm. Furthermore, in the geographic information database, such as a GPS database, the real location coordinates of the target map element in the world coordinate system are determined, that is, the actual location information of the target map element is determined. A distance between the target map element and an initial point is determined according to the actual location information of the target map element and initial point location information of the simulated navigation route, and the estimated time when the user passes the target map element is determined, that is, the actual arrival time information of the target map feature is determined according to the preset moving speed of the user in the simulated navigation route.

Optionally, before "the target map element in the navigation broadcast information is acquired" in S202, the method further includes a step described below.

In the case where the navigation broadcast information is voice broadcast information, voice recognition is performed on the voice broadcast information so as to determine text broadcast information corresponding to the voice broadcast information.

In an embodiment, in the case where the navigation broadcast information is the voice broadcast information, the voice broadcast information needs to be converted into the text broadcast information before the target map element is acquired. Based on a preset voice recognition algorithm, such as a dynamic time warping algorithm, a hidden Markov model algorithm based on a parametric model and a vector quantization algorithm based on a non-parametric model, the voice recognition is performed on the voice broadcast information so as to convert the voice broadcast information into the text broadcast information.

In the case where the navigation broadcast information is the voice broadcast information, the voice recognition is performed on the voice broadcast information so as to determine the text broadcast information corresponding to the voice broadcast information, thereby laying a foundation for the subsequent acquisition of the target map element in the navigation broadcast information; and it is ensured that the subsequent acquisition of the target map element may be performed whether the type of the navigation broadcast information is the voice broadcast information or the text broadcast information, thereby improving the scope of application of the method.

In S203, the navigation broadcast information is detected according to the standard attribute information and the broadcast attribute information corresponding to the navigation broadcast information.

In an embodiment, difference information between the standard attribute information and the broadcast attribute information of the same category as the standard attribute information and in the navigation broadcast information is determined, and the navigation broadcast information is detected based on the difference information.

Optionally, S203 includes A, B, and C.

A. Broadcast location difference information is determined according to the broadcast location information and the actual location information.

In an embodiment, a distance difference between the broadcast location information and the actual location information is calculated according to the broadcast location information corresponding to any piece of navigation broadcast information and the actual location information of the target map element included in the piece of navigation broadcast information, and the distance difference is taken as the broadcast location difference information corresponding to the piece of navigation broadcast information.

B. Broadcast time difference information is determined according to the broadcast time information and the actual arrival time information.

In an embodiment, a time difference between the broadcast time information and the actual arrival time information is calculated as the broadcast time difference information according to the broadcast time information corresponding to any piece of navigation broadcast information and the actual arrival time information of the target map element included in the piece of navigation broadcast information.

Exemplarily, assuming that the broadcast time information corresponding to any piece of navigation broadcast information is "5 minutes" and the actual arrival time information of the target map element included in this piece of navigation broadcast information is "5 minutes and 30 seconds", then the broadcast time difference information corresponding to this piece of navigation broadcast information is "30 seconds".

C. The navigation broadcast information is detected according to the broadcast location difference information and/or the broadcast time difference information.

In an embodiment, the broadcast location difference information is compared with a preset threshold, and/or the broadcast time difference is compared with a preset threshold, and finally the detection result of the navigation broadcast information is determined according to a comparison result.

The broadcast location difference information is determined according to the broadcast location information and the actual location information, the broadcast time difference information is determined according to the broadcast time information and the actual arrival time information, and then the navigation broadcast information is detected according to the broadcast location difference information and/or the broadcast time difference information so that the navigation information is detected according to two dimensions, that is, the distance difference and/or the time difference generated by the navigation broadcast, thereby improving the accuracy and reliability of the detection and achieving a more comprehensive detection of the immediacy of navigation information.

### Optionally, C includes C1 and C2.

C1. A location difference threshold range and/or a time difference threshold range corresponding to the target map element are determined.

The corresponding location difference threshold range and time difference threshold range are preset for each target map element according to the importance of each target map element. For example, if the importance of a target map element A is relatively high, a threshold value of the location difference threshold range is set to be larger and a threshold value of the time difference threshold range is set to be longer, so as to remind a driver to pay attention to road conditions as soon as possible.

C2. The navigation broadcast information is detected according to the broadcast location difference information and the location difference threshold range, and/or the broadcast time difference information and the time difference threshold range.

In an embodiment, the broadcast location difference information is matched with the location difference threshold range, and/or the broadcast time difference information is matched with the time difference threshold range so that whether the broadcast location difference information is within the location difference threshold range and/or whether the broadcast time difference information is within the time difference threshold range are determined, so as to obtain the detection result of the navigation broadcast information.

The location difference threshold range and/or time difference threshold range corresponding to the target map element are determined, and the navigation broadcast information is detected according to the broadcast location difference information and the location difference threshold range, and/or the broadcast time difference information and the time difference threshold range so that the navigation broadcast information is automatically detected according to the location difference threshold range and/or the time difference threshold range and a preset threshold range without the need for human subjective determination, thereby saving costs and improving efficiency.

### Optionally, C2 includes two cases described below.

C21. It is determined that a detection result of the navigation broadcast information is abnormal navigation broadcast in the case where the broadcast location difference information is not within the location difference threshold range and/or in the case where the broadcast time difference information is not within the time difference threshold range.

Exemplarily, it is assumed that the location difference threshold range of any piece of navigation broadcast information is (50 meters, 300 meters), the time difference threshold range is "3 seconds, 6 seconds", the broadcast location difference information is "60 meters", and the broadcast time difference information is "7 seconds". Since "7 seconds" is not within the time difference threshold range, it is determined that the detection result of this piece of navigation broadcast information is abnormal navigation broadcast.

Exemplarily, it is assumed that the location difference threshold range of any piece of navigation broadcast information is (50 meters, 300 meters), the time difference threshold range is "3 seconds, 6 seconds", the broadcast location difference information is "30 meters", and the broadcast time difference information is "5 seconds". Since "30 meters" is not within the location difference threshold range, the user cannot make corresponding response in a timely manner so that it is determined that the detection result of this piece of navigation broadcast information is abnormal navigation broadcast.

Exemplarily, it is assumed that the location difference threshold range of any piece of navigation broadcast information is (50 meters, 300 meters), the time difference threshold range is "3 seconds, 6 seconds", the broadcast location difference information is "350 meters", and the broadcast time difference information is "5 seconds". Since "350 meters" is not within the location difference threshold range, the on-site perception of the user is not strong so that it is determined that the detection result of this piece of navigation broadcast information is abnormal navigation broadcast.

C22. It is determined that the detection result of the navigation broadcast information is normal navigation broadcast in the case where the broadcast location difference information is within the location difference threshold range and in the case where the broadcast time difference information is within the time difference threshold range.

Exemplarily, it is assumed that the location difference threshold range of any piece of navigation broadcast information is (50 meters, 300 meters), the time difference threshold range is "3 seconds, 6 seconds", the broadcast location difference information is "60 meters", and the broadcast time difference information is "5 seconds". Since the broadcast location difference information is within the location difference threshold range and the broadcast time difference information is within the time difference threshold range, it is determined that the detection result of this piece of navigation broadcast information is normal navigation broadcast.

It is determined that the detection result of the navigation broadcast information is abnormal navigation broadcast in the case where the broadcast location difference information is not within the location difference threshold range and/or in the case where the broadcast time difference information is not within the time difference threshold range so that the navigation broadcast information which is abnormal navigation broadcast is determined, so as to guide the optimization of the map software, thereby accelerating the iterative efficiency of the map software and improving the user experience.

In the present disclosure, the target map element in the navigation broadcast information is acquired, the standard attribute information corresponding to the target map element is determined, where the standard attribute information includes the actual location information and/or actual arrival time information of the target map element, and the navigation broadcast information is detected according to the broadcast attribute information and the standard attribute information so that the navigation broadcast information is detected according to the broadcast attribute information in conjunction with the standard attribute information corresponding to the target map element without the need for manual on-site road testing, thereby improving the detection efficiency of the navigation broadcast information and reducing the detection cost.

Based on the preceding embodiments, this embodiment further provides an embodiment in which navigation broadcasts of at least two map software programs are compared.

Two map software programs are used as an example for description. The navigation broadcast information of map software A and map software B including the same target map element is acquired. According to the method provided in this embodiment, the broadcast location difference information and/or the broadcast time difference information of the navigation broadcast information of the map software A and the map software B are determined, respectively. The broadcast location difference information of the map software A is compared with the broadcast location difference information of the map software B, and the broadcast time difference information of the map software A is compared with the broadcast time difference information of the map software B. In this manner, the navigation broadcast of the map software A is compared with the navigation broadcast of the map software B.

Optionally, if 80% of the broadcast location difference information in the map software A is greater than the corresponding broadcast location difference information in the map software B, and/or 80% of the broadcast time difference information in the map software A is greater than the corresponding broadcast time difference information in the map software B, it is considered that the navigation broadcast timing of the map software A is abnormal, and then the product optimization of the map software A is guided.

Operations, including acquisition, storage, and application, on a user's personal information involved in the solution of the present disclosure conform to relevant laws and regulations and do not violate the public policy doctrine.

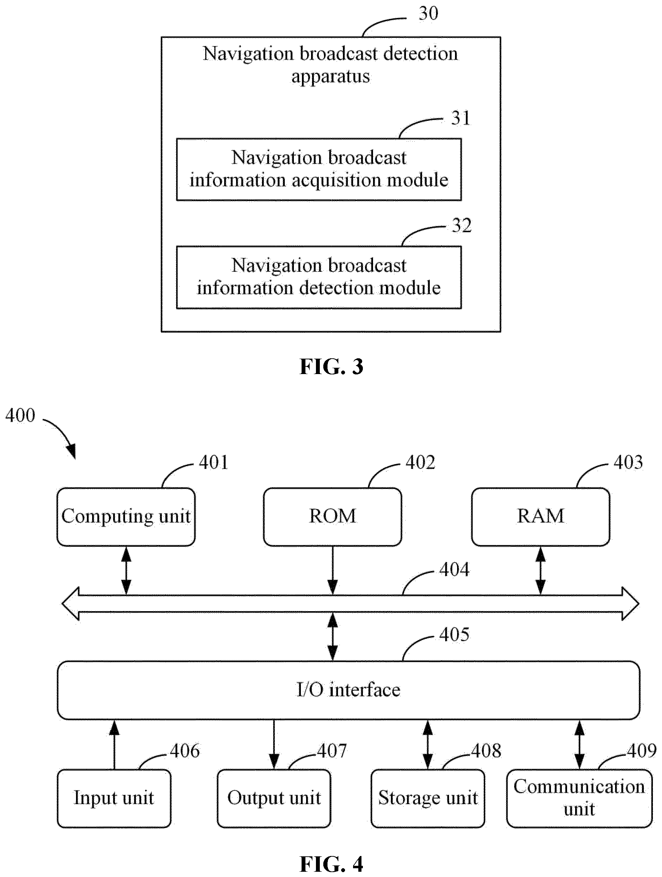

FIG. 3 is a structural diagram of a navigation broadcast detection apparatus according to an embodiment of the present disclosure. This embodiment is applicable to the case of detecting the immediacy of navigation broadcast information. The apparatus in this embodiment may be implemented by software and/or hardware and integrated in any electronic device having a computing capability.

As shown in FIG. 3, a navigation broadcast detection apparatus 30 according to this embodiment may include a navigation broadcast information acquisition module 31 and a navigation broadcast information detection module 32.

The navigation broadcast information acquisition module 31 is configured to acquire navigation broadcast information associated with a simulated navigation route. The navigation broadcast information detection module 32 is configured to detect the navigation broadcast information according to broadcast attribute information corresponding to the navigation broadcast information, where the broadcast attribute information includes broadcast time information and/or broadcast location information.

Optionally, the navigation broadcast information detection module 32 is configured to perform steps described below.

A target map element in the navigation broadcast information is acquired and standard attribute information corresponding to the target map element is determined, where the standard attribute information includes actual location information and/or actual arrival time information of the target map element; and the navigation broadcast information is detected according to the broadcast attribute information and the standard attribute information.

Optionally, the apparatus further includes a voice recognition module configured to perform a step described below.

In the case where the navigation broadcast information is voice broadcast information, voice recognition is performed on the voice broadcast information so as to determine text broadcast information corresponding to the voice broadcast information.

Optionally, the navigation broadcast information detection module 32 is configured to detect the navigation broadcast information according to the broadcast attribute information and the standard attribute information in the manners described below.

Broadcast location difference information is determined according to the broadcast location information and the actual location information; broadcast time difference information is determined according to the broadcast time information and the actual arrival time information; and the navigation broadcast information is detected according to the broadcast location difference information and/or the broadcast time difference information.

Optionally, the navigation broadcast information detection module 32 is configured to detect the navigation broadcast information according to the broadcast location difference information and/or the broadcast time difference information in the manners described below.

A location difference threshold range and/or a time difference threshold range corresponding to the target map element is determined; and the navigation broadcast information is detected according to the broadcast location difference information and the location difference threshold range, and/or the broadcast time difference information and the time difference threshold range.

Optionally, the navigation broadcast information detection module 32 is configured to detect the navigation broadcast information according to the broadcast location difference information and the location difference threshold range, and/or the broadcast time difference information and the time difference threshold range in the manners described below.

It is determined that a detection result of the navigation broadcast information is abnormal navigation broadcast in the case where the broadcast location difference information is not within the location difference threshold range and/or in the case where the broadcast time difference information is not within the time difference threshold range.

The navigation broadcast detection apparatus 30 in the embodiment of the present disclosure may perform the navigation broadcast detection method in the embodiments of the present disclosure and has function modules and effects corresponding to the performed method. For content not described in detail in this embodiment, reference may be made to description in any method embodiment of the present disclosure.

According to the embodiments of the present disclosure, the present disclosure further provides an electronic device, a readable storage medium, and a computer program product.

FIG. 4 is a block diagram of an example electronic device 400 that may be configured to implement an embodiment of the present disclosure. Electronic devices 400 are intended to represent various forms of digital computers, for example, laptop computers, desktop computers, worktables, personal digital assistants, servers, blade servers, mainframe computers and other applicable computers. Electronic devices 400 may also represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 4, the device 400 includes a computing unit 401. The computing unit 401 may perform various types of appropriate operations and processing based on a computer program stored in a read-only memory (ROM) 402 or a computer program loaded from a storage unit 408 to a random-access memory (RAM) 403. Various programs and data required for operations of the device 400 may also be stored in the RAM 403. The computing unit 401, the ROM 402, and the RAM 403 are connected to each other through a bus 404. An input/output (I/O) interface 405 is also connected to the bus 404.

Multiple components in the device 400 are connected to the I/O interface 405. The multiple components include an input unit 406 such as a keyboard and a mouse, an output unit 407 such as various types of displays and speakers, the storage unit 408 such as a magnetic disk and an optical disk, and a communication unit 409 such as a network card, a modem or a wireless communication transceiver. The communication unit 409 allows the device 400 to exchange information/data with other devices over a computer network such as the Internet and/or various telecommunications networks.

The computing unit 401 may be a general-purpose and/or special-purpose processing component having multiple processing and computing capabilities. Some examples of the computing unit 401 include, but are not limited to, central processing units (CPUs), graphics processing units (GPUs), various dedicated artificial intelligence (AI) computing chips, various computing units running machine learning models and algorithms, digital signal processors (DSPs) and any suitable processors, controllers and microcontrollers. The computing unit 401 performs methods and processing described above, such as the navigation broadcast detection method. For example, in some embodiments, the navigation broadcast detection method may be implemented as a computer software program tangibly contained in a machine-readable medium such as the storage unit 408. In some embodiments, part or all of computer programs may be loaded and/or installed on the device 400 via the ROM 402 and/or the communication unit 409. When the computer programs are loaded into the RAM 403 and executed by the computing unit 401, one or more steps of the preceding navigation broadcast detection method may be performed. Alternatively, in other embodiments, the computing unit 401 may be configured, in any other appropriate manner (for example, by means of firmware), to perform the navigation broadcast detection method.

The various embodiments of the systems and techniques described herein may be implemented in digital electronic circuitry, integrated circuitry, a field-programmable gate array (FPGA), an application-specific integrated circuit (ASIC), application specific standard parts (ASSP), a system on a chip (SoC), a complex programmable logic device (CPLD), computer hardware, firmware, software and/or a combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting data and instructions to the memory system, the at least one input device and the at least one output device.

Program codes for implementation of the methods of the present disclosure may be written in one programming language or any combination of multiple programming languages. The program codes may be provided for the processor or controller of a general-purpose computer, a special-purpose computer, or another programmable data processing apparatus to enable functions/operations specified in flowcharts and/or block diagrams to be implemented when the program codes are executed by the processor or controller. The program codes may be executed entirely on a machine, partly on the machine, as a stand-alone software package, partly on the machine and partly on a remote machine, or entirely on the remote machine or a server.

In the context of the present disclosure, a machine-readable medium may be a tangible medium that may include or store a program used by or used in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. Examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device or any suitable combination thereof.

In order that interaction with a user is provided, the systems and techniques described herein may be implemented on a computer. The computer has a display apparatus for displaying information to the user, such as a cathode-ray tube (CRT) or a liquid-crystal display (LCD) monitor, and a keyboard and a pointing apparatus such as a mouse or a trackball through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and the Internet.

A computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in conventional physical host and virtual private server (VPS) services. The server may also be a server of a distributed system or a server combined with a blockchain.

Various forms of the preceding flows may be used, with steps reordered, added, or removed. For example, multiple steps described in the present disclosure may be executed in parallel, in sequence or in a different order as long as the desired result of the technical solutions disclosed in the present disclosure is achieved. The execution sequence of these steps is not limited herein.

## Claims

1. A navigation broadcast detection method, executed by an electronic device, comprising:
acquiring (S101, S201) navigation broadcast information associated with a simulated navigation route; and
detecting (S102) the navigation broadcast information according to broadcast attribute information corresponding to the navigation broadcast information, wherein the broadcast attribute information comprises broadcast time information and broadcast location information, wherein broadcast time information indicates a time node when a target map software performs the navigation broadcast and broadcast location information indicates location coordinates of the user when the target map software performs the navigation broadcast;
wherein detecting (S102) the navigation broadcast information according to the broadcast attribute information corresponding to the navigation broadcast information comprises:
acquiring (S202) a target map element in the navigation broadcast information and determining standard attribute information corresponding to the target map element, wherein the standard attribute information comprises actual location information and actual arrival time information of the target map element, wherein actual location information refers to real location coordinates of the target map element in a world coordinate system and actual arrival time information refers to estimated time when the user passes the target map element in the simulated navigation route; and
detecting (S203) the navigation broadcast information according to the broadcast attribute information and the standard attribute information; and **characterized in that**:
detecting (S203) the navigation broadcast information according to the broadcast attribute information and the standard attribute information comprises:
determining broadcast location difference information according to the broadcast location information and the actual location information;
determining broadcast time difference information according to the broadcast time information and the actual arrival time information; and
detecting immediacy of the navigation broadcast information for the car owners according to at least one of the broadcast location difference information or the broadcast time difference information.

2. The method of claim 1, before the target map element in the navigation broadcast information is acquired, the method further comprises:
in a case where the navigation broadcast information is voice broadcast information, performing voice recognition on the voice broadcast information to determine text broadcast information corresponding to the voice broadcast information.

3. The method of claim 1, wherein detecting the navigation broadcast information according to at least one of the broadcast location difference information or the broadcast time difference information comprises:
determining at least one of a location difference threshold range or a time difference threshold range corresponding to the target map element; and
detecting the navigation broadcast information according to at least one of the following combinations: the broadcast location difference information and the location difference threshold range, or the broadcast time difference information and the time difference threshold range.

4. The method of claim 3, wherein detecting the navigation broadcast information according to at least one of the following combinations: the broadcast location difference information and the location difference threshold range, or the broadcast time difference information and the time difference threshold range comprises:
determining that a detection result of the navigation broadcast information is abnormal navigation broadcast in at least one of the following cases: the broadcast location difference information is not within the location difference threshold range; or the broadcast time difference information is not within the time difference threshold range.

5. A navigation broadcast detection apparatus (30), comprising:
a navigation broadcast information acquisition module (31) configured to acquire navigation broadcast information associated with a simulated navigation route; and
a navigation broadcast information detection module (32) configured to detect the navigation broadcast information according to broadcast attribute information corresponding to the navigation broadcast information, wherein the broadcast attribute information comprises broadcast time information and broadcast location information, wherein broadcast time information indicates a time node when the target map software performs the navigation broadcast and broadcast location information indicates location coordinates of the user when the target map software performs the navigation broadcast;
wherein the navigation broadcast information detection module (32) is configured to:
acquire a target map element in the navigation broadcast information and determine standard attribute information corresponding to the target map element, wherein the standard attribute information comprises actual location information and actual arrival time information of the target map element, wherein actual location information refers to real location coordinates of the target map element in a world coordinate system and actual arrival time information refers to estimated time when the user passes the target map element in the simulated navigation route; and
detect the navigation broadcast information according to the broadcast attribute information and the standard attribute information; and **characterized in that**:
the navigation broadcast information detection module (32) is configured to detect the navigation broadcast information according to the broadcast attribute information and the standard attribute information by:
determining broadcast location difference information according to the broadcast location information and the actual location information;
determining broadcast time difference information according to the broadcast time information and the actual arrival time information; and
detecting immediacy of the navigation broadcast information for the car owners according to at least one of the broadcast location difference information or the broadcast time difference information.

6. The apparatus of claim 5, further comprising a voice recognition module configured to:
in a case where the navigation broadcast information is voice broadcast information, perform voice recognition on the voice broadcast information to determine text broadcast information corresponding to the voice broadcast information.

7. The apparatus of claim 5, wherein the navigation broadcast information detection module (32) is configured to detect the navigation broadcast information according to at least one of the broadcast location difference information or the broadcast time difference information by:
determining at least one of a location difference threshold range or a time difference threshold range corresponding to the target map element; and
detecting the navigation broadcast information according to at least one of the following combinations: the broadcast location difference information and the location difference threshold range, or the broadcast time difference information and the time difference threshold range.

8. The apparatus of claim 7, wherein the navigation broadcast information detection module (32) is configured to detect the navigation broadcast information according to at least one of the following combinations: the broadcast location difference information and the location difference threshold range, or the broadcast time difference information and the time difference threshold range by:
determining that a detection result of the navigation broadcast information is abnormal navigation broadcast in at least one of the following cases: the broadcast location difference information is not within the location difference threshold range, or the broadcast time difference information is not within the time difference threshold range.

9. An electronic device, comprising:
at least one processor; and
a memory communicatively connected to the at least one processor;
wherein the memory stores instructions executable by the at least one processor to enable the at least one processor to perform the navigation broadcast detection method of any one of claims 1 to 4.

10. A non-transitory computer-readable storage medium storing computer instructions for causing a computer to perform the navigation broadcast detection method of any one of claims 1 to 4.

11. A computer program, wherein when the computer program is executed by a processor, the navigation broadcast detection method of any one of claims 1 to 4 is performed.

## Patentansprüche

1. Navigationsausstrahlungsdetektionsverfahren, das von einer elektronischen Vorrichtung ausgeführt wird, mit:
Erfassen (S101, S201) von Navigationsausstrahlungsinformation, die zu einer simulierten Navigationsroute gehört; und
Detektieren (S102) der Navigationsausstrahlungsinformation gemäß einer Ausstrahlungsattributinformation, die der Navigationsausstrahlungsinformation entspricht, wobei die Ausstrahlungsattributinformation Ausstrahlungszeitinformation und Ausstrahlungsortsinformation enthält, wobei die Ausstrahlungszeitinformation einen Zeitmodus angibt, wenn eine Zielkartensoftware die Navigationsausstrahlung durchführt, und die Ausstrahlungsortsinformation Ortskoordinaten des Benutzers angibt, wenn die Zielkartensoftware die Navigationsausstrahlung durchführt;
wobei das Detektieren (S102) der Navigationsausstrahlungsinformation gemäß der Ausstrahlungsattributinformation, die der Navigationsausstrahlungsinformation entspricht, aufweist:
Erfassen (S202) eines Zielkartenelements in der Navigationsausstrahlungsinformation und Bestimmen einer Standardattributinformation, die dem Zielkartenelement entspricht, wobei die Standardattributinformation tatsächliche Ortsinformation und tatsächliche Ankunftszeitinformation des Zielkartenelements enthält, wobei die tatsächliche Ortsinformation sich auf reale Ortskoordinaten des Zielkartenelements in einem Weltkoordinatensystem bezieht, und die tatsächliche Ankunftszeitinformation sich auf eine geschätzte Zeit bezieht, wenn der Benutzer das Zielkartenelement in der simulierten Navigationsroute passiert, und
Detektieren (S203) der Navigationsausstrahlungsinformation gemäß der Ausstrahlungsattributinformation und der Standardattributinformation; **dadurch gekennzeichnet, dass**
das Detektieren (S203) der Navigationsausstrahlungsinformation gemäß der Ausstrahlungsattributinformation und der Standardattributinformation aufweist:
Bestimmen einer Ausstrahlungsortsdifferenzinformation gemäß der Ausstrahlungsortsinformation und der tatsächlichen Ortsinformation;
Bestimmen einer Ausstrahlungszeitdifferenzinformation gemäß der Ausstrahlungszeitinformation und der tatsächlichen Ankunftszeitinformation; und
Detektieren einer Unmittelbarkeit der Navigationsausstrahlungsinformation für die Fahrzeugbetreiber gemäß mindestens einer von der Ausstrahlungsortsdifferenzinformation und/oder der Ausstrahlungszeitdifferenzinformation.

2. Verfahren nach Anspruch 1, bevor das Zielkartenelement in der Navigationsausstrahlungsinformation erfasst wird, das Verfahren ferner aufweist:
in einem Fall, bei dem die Navigationsausstrahlungsinformation Sprachausstrahlungsinformation ist, Durchführen einer Spracherkennung für die Sprachausstrahlungsinformation, um Textausstrahlungsinformation zu bestimmen, die der Sprachausstrahlungsinformation entspricht.

3. Verfahren nach Anspruch 1, bei dem das Detektieren der Navigationsausstrahlungsinformation gemäß mindestens einer von der Ausstrahlungsortsdifferenzinformation und/oder der Ausstrahlungszeitdifferenzinformation aufweist:
Bestimmen von mindestens einem von einem Ortsdifferenzschwellenwertbereich und/oder einem Zeitdifferenzschwellenwertbereich, der dem Zielkartenelement entspricht; und
Detektieren der Navigationsausstrahlungsinformation gemäß mindestens einer von folgenden Kombinationen: Ausstrahlungsortsdifferenzinformation und Ortsdifferenzschwellenwertbereich, oder Ausstrahlungszeitdifferenzinformation und Zeitdifferenzschwellenwertbereich.

4. Verfahren nach Anspruch 3, bei dem das Detektieren der Navigationsausstrahlungsinformation gemäß mindestens einer von folgenden Kombinationen: Ausstrahlungsortsdifferenzinformation und Ortsdifferenzschwellenwertbereich, oder Ausstrahlungszeitdifferenzinformation und Zeitdifferenzschwellenwertbereich, aufweist:
Bestimmen, dass ein Detektionsergebnis der Navigationsausstrahlungsinformation abnormale Navigationsausstrahlung ist in mindestens einem der folgenden Fälle; die Ausstrahlungsortsdifferenzinformation ist nicht innerhalb des Ortsdifferenzschwellenwertbereichs, oder die Ausstrahlungszeitdifferenzinformation ist nicht innerhalb des Zeitdifferenzschwellenwertbereichs.

5. Navigationsausstrahlungsdetektionsvorrichtung (30), mit:
einem Navigationsausstrahlungsinformationserfassungsmodul (31), das konfiguriert ist zum Erfassen einer Navigationsausstrahlungsinformation, die zu einer simulierten Navigationsroute gehört; und
einem Navigationsausstrahlungsinformationsdetektionsmodul (32), das konfiguriert ist zum Detektieren der Navigationsausstrahlungsinformation gemäß einer Ausstrahlungsattributinformation, die der Navigationsausstrahlungsinformation entspricht, wobei die Ausstrahlungsattributinformation Ausstrahlungszeitinformation und Ausstrahlungsortsinformation enthält, wobei die Ausstrahlungszeitinformation einen Zeitmodus angibt, wenn die Zielkartensoftware die Navigationsausstrahlung durchführt, und die Ausstrahlungsortsinformation Ortskoordinaten des Benutzers angibt, wenn die Zielkartensoftware die Navigationsausstrahlung durchführt;
wobei das Navigationsausstrahlungsinformationsdetektionsmodul (32) konfiguriert ist zum:
Erfassen eines Zielkartenelements in der Navigationsausstrahlungsinformation und Bestimmen einer Standardattributinformation, die dem Zielkartenelement entspricht, wobei die Standardattributinformation tatsächliche Ortsinformation und tatsächliche Ankunftszeitinformation des Zielkartenelements enthält, wobei die tatsächliche Ortsinformation sich auf reale Ortskoordinaten des Zielkartenelements in einem Weltkoordinatensystem bezieht, und die tatsächliche Ankunftszeitinformation sich auf eine geschätzte Zeit bezieht, wenn der Benutzer das Zielkartenelement in der simulierten Navigationsroute passiert; und
Detektieren der Navigationsausstrahlungsinformation gemäß der Ausstrahlungsattributinformation und der Standardattributinformation; **dadurch gekennzeichnet, dass**
das Navigationsausstrahlungsinformationsdetektionsmodul (32) konfiguriert ist zum Detektieren der Navigationsausstrahlungsinformation gemäß der Ausstrahlungsattributinformation und der Standardattributinformation durch:
Bestimmen einer Ausstrahlungsortsdifferenzinformation gemäß der Ausstrahlungsortsinformation und der tatsächlichen Ortsinformation;
Bestimmen von Ausstrahlungszeitdifferenzinformation gemäß der Ausstrahlungszeitinformation und der tatsächlichen Ankunftszeitinformation; und
Detektieren einer Unmittelbarkeit der Navigationsausstrahlungsinformation für die Fahrzeugbetreiber gemäß mindestens der Ausstrahlungsortsdifferenzinformation und/oder der Ausstrahlungszeitdifferenzinformation.

6. Vorrichtung nach Anspruch 5, ferner mit einem Spracherkennungsmodul, das konfiguriert ist zum:
in einem Fall, bei dem die Navigationsausstrahlungsinformation Sprachausstrahlungsinformation ist, Durchführen einer Spracherkennung für die Sprachausstrahlungsinformation, um Textausstrahlungsinformation zu bestimmen, die der Sprachausstrahlungsinformation entspricht.

7. Vorrichtung nach Anspruch 5, bei der das Navigationsausstrahlungsinformationsdetektionsmodul (32) konfiguriert ist zum Detektieren der Navigationsausstrahlungsinformation gemäß mindestens der Ausstrahlungsortsdifferenzinformation und/oder der Ausstrahlungszeitdifferenzinformation durch:
Bestimmen von mindestens einem Ortsdifferenzschwellenwertbereich und/oder einem Zeitdifferenzschwellenwertbereich, der dem Zielkartenelement entspricht; und
Detektieren der Navigationsausstrahlungsinformation gemäß mindestens einer der folgenden Kombinationen: Ausstrahlungsortsdifferenzinformation und Ortsdifferenzschwellenwertbereich, oder Ausstrahlungszeitdifferenzinformation und Zeitdifferenzschwellenwertbereich.

8. Vorrichtung nach Anspruch 7, bei der das Navigationsausstrahlungsinformationsdetektionsmodul (32) konfiguriert ist zum Detektieren der Navigationsausstrahlungsinformation gemäß mindestens einer der folgenden Kombinationen: Ausstrahlungsortsdifferenzinformation und Ortsdifferenzschwellenwertbereich, oder Ausstrahlungszeitdifferenzinformation und Zeitdifferenzschwellenwertbereich, durch:
Bestimmen, dass ein Detektionsergebnis der Navigationsausstrahlungsinformation abnormale Navigationsausstrahlung ist in mindestens einem der folgenden Fälle: die Ausstrahlungsortsdifferenzinformation ist nicht innerhalb des Ortsdifferenzschwellenwertbereichs, oder die Ausstrahlungszeitdifferenzinformation ist nicht innerhalb des Zeitdifferenzschwellenwertbereichs.

9. Elektronische Vorrichtung, mit:
mindestens einem Prozessor; und
einem Speicher, der kommunikativ mit dem mindestens einen Prozessor verbunden ist;
wobei der Speicher Befehle speichert, die von dem mindestens einen Prozessor ausführbar sind, um dem mindestens einen Prozessor zu erlauben, das Navigationsausstrahlungsdetektionsverfahren nach einem der Ansprüche 1 bis 4 durchzuführen.

10. Nichtflüchtiges computerlesbares Speichermedium, das Computerbefehle speichert zur Veranlassung eines Computers, das Navigationsausstrahlungsdetektionsverfahren nach einem der Ansprüche 1 bis 4 durchzuführen.

11. Computerprogramm, wobei wenn das Computerprogramm von einem Prozessor ausgeführt wird, das Navigationsausstrahlungsdetektionsverfahren nach einem der Ansprüche 1 bis 4 durchgeführt wird.

## Revendications

1. Procédé de détection de diffusion de navigation, exécuté par un dispositif électronique, comprenant :
l'acquisition (S 101, S201) d'informations de diffusion de navigation associées à un itinéraire de navigation simulé ; et
la détection (S102) des informations de diffusion de navigation en fonction d'informations d'attribut de diffusion correspondant aux informations de diffusion de navigation, dans lequel les informations d'attribut de diffusion comprennent des informations de temps de diffusion et des informations d'emplacement de diffusion, dans lequel des informations de temps de diffusion indiquent un noeud temporel auquel un logiciel de carte cible réalise la diffusion de navigation et des informations d'emplacement de navigation indiquent des coordonnées d'emplacement de l'utilisateur lorsque le logiciel de carte cible réalise la diffusion de navigation ;
dans lequel la détection (S102) des informations de diffusion de navigation en fonction des informations d'attribut de diffusion correspondant aux informations de diffusion de navigation comprend :
l'acquisition (S202) d'un élément de carte cible dans les informations de diffusion de navigation et la détermination d'informations d'attribut standard correspondant à l'élément de carte cible, dans lequel les informations d'attribut standard comprennent des informations d'emplacement réel et des informations de temps d'arrivée réel de l'élément de carte cible, dans lequel des informations d'emplacement réel font référence à des coordonnées d'emplacement réel de l'élément de carte cible dans un système mondial de coordonnées et des informations de temps d'arrivée réel font référence à un temps estimé auquel l'utilisateur passe par l'élément de carte cible dans l'itinéraire de navigation simulé ; et
la détection (S203) des informations de diffusion de navigation en fonction des informations d'attribut de diffusion et des informations d'attribut standard ; et **caractérisé en ce que** :
la détection (S203) des informations de diffusion de navigation en fonction des informations d'attribut de diffusion et des informations d'attribut standard comprend :
la détermination d'informations de différence d'emplacement de diffusion en fonction des informations d'emplacement de diffusion et des informations d'emplacement réel ;
la détermination d'informations de différence de temps de diffusion en fonction des informations de temps de diffusion et des informations de temps d'arrivée réel ; et
la détection d'une immédiateté des informations de diffusion de navigation pour les propriétaires de voitures en fonction d'au moins l'une parmi les informations de différence d'emplacement de diffusion et les informations de différence de temps de diffusion.

2. Procédé selon la revendication 1, avant l'acquisition de l'élément de carte cible dans les informations de diffusion de navigation, le procédé comprend en outre :
dans un cas où les informations de diffusion de navigation sont des informations de diffusion vocale, la réalisation d'une reconnaissance vocale sur les informations de diffusion vocale pour déterminer des informations de diffusion textuelle correspondant aux informations de diffusion vocale.

3. Procédé selon la revendication 1, dans lequel la détection des informations de diffusion de navigation en fonction d'au moins l'une parmi les informations de différence d'emplacement de diffusion et les informations de différence de temps de diffusion comprend :
la détermination d'au moins l'une parmi une plage de seuil de différence d'emplacement et une plage de seuil de différence de temps correspondant à l'élément de carte cible ; et
la détection des informations de diffusion de navigation en fonction d'au moins l'une parmi les combinaisons suivantes : les informations de différence d'emplacement de diffusion et la plage de seuil de différence d'emplacement, et les informations de différence de temps de diffusion et la plage de seuil de différence de temps.

4. Procédé selon la revendication 3, dans lequel la détection des informations de diffusion de navigation en fonction d'au moins l'une parmi les combinaisons suivantes : les informations de différence d'emplacement de diffusion et la plage de seuil de différence d'emplacement, et les informations de différence de temps de diffusion et la plage de seuil de différence de temps comprend :
la détermination qu'un résultat de détection des informations de diffusion de navigation est une diffusion de navigation anormale dans au moins l'un des cas suivants : les informations de différence d'emplacement de diffusion ne sont pas dans la plage de seuil de différence d'emplacement, et les informations de différence de temps de diffusion ne sont pas dans la plage de seuil de différence de temps.

5. Appareil de détection de diffusion de navigation (30), comprenant :
un module d'acquisition d'informations de diffusion de navigation (31) configuré pour acquérir des informations de diffusion de navigation associées à un itinéraire de navigation simulé ; et
un module de détection d'informations de diffusion de navigation (32) configuré pour détecter les informations de diffusion de navigation en fonction d'informations d'attribut de diffusion correspondant aux informations de diffusion de navigation, dans lequel les informations d'attribut de diffusion comprennent des informations de temps de diffusion et des informations d'emplacement de diffusion, dans lequel des informations de temps de diffusion indiquent un noeud temporel auquel un logiciel de carte cible réalise la diffusion de navigation et des informations d'emplacement de navigation indiquent des coordonnées d'emplacement de l'utilisateur lorsque le logiciel de carte cible réalise la diffusion de navigation ;
dans lequel le module de détection d'informations de diffusion de navigation (32) est configuré pour :
acquérir un élément de carte cible dans les informations de diffusion de navigation et déterminer des informations d'attribut standard correspondant à l'élément de carte cible, dans lequel les informations d'attribut standard comprennent des informations d'emplacement réel et des informations de temps d'arrivée réel de l'élément de carte cible, dans lequel des informations d'emplacement réel font référence à des coordonnées d'emplacement réel de l'élément de carte cible dans un système mondial de coordonnées et des informations de temps d'arrivée réel font référence à un temps estimé auquel l'utilisateur passe par l'élément de carte cible dans l'itinéraire de navigation simulé ; et
détecter les informations de diffusion de navigation en fonction des informations d'attribut de diffusion et des informations d'attribut standard ; et **caractérisé en ce que** :
le module de détection d'informations de diffusion de navigation (32) est configuré pour détecter les informations de diffusion de navigation en fonction des informations d'attribut de diffusion et des informations d'attribut standard par :
la détermination d'informations de différence d'emplacement de diffusion en fonction des informations d'emplacement de diffusion et des informations d'emplacement réel ;
la détermination d'informations de différence de temps de diffusion en fonction des informations de temps de diffusion et des informations de temps d'arrivée réel ; et
la détection d'une immédiateté des informations de diffusion de navigation pour les propriétaires de voitures en fonction d'au moins l'une parmi les informations de différence d'emplacement de diffusion et les informations de différence de temps de diffusion.

6. Appareil selon la revendication 5, comprenant en outre un module de reconnaissance vocale configuré pour :
dans un cas où les informations de diffusion de navigation sont des informations de diffusion vocale, réaliser une reconnaissance vocale sur les informations de diffusion vocale pour déterminer des informations de diffusion textuelle correspondant aux informations de diffusion vocale.

7. Appareil selon la revendication 5, dans lequel le module de détection d'informations de diffusion de navigation (32) est configuré pour détecter les informations de diffusion de navigation en fonction d'au moins l'une parmi les informations de différence d'emplacement de diffusion et les informations de différence de temps de diffusion par :
la détermination d'au moins l'une parmi une plage de seuil de différence d'emplacement et une plage de seuil de différence de temps correspondant à l'élément de carte cible ; et
la détection des informations de diffusion de navigation en fonction d'au moins l'une parmi les combinaisons suivantes : les informations de différence d'emplacement de diffusion et la plage de seuil de différence d'emplacement, et les informations de différence de temps de diffusion et la plage de seuil de différence de temps.

8. Appareil selon la revendication 7, dans lequel le module de détection d'informations de diffusion de navigation (32) est configuré pour détecter les informations de diffusion de navigation en fonction d'au moins l'une parmi les combinaisons suivantes : les informations de différence d'emplacement de diffusion et la plage de seuil de différence d'emplacement, et les informations de différence de temps de diffusion et la plage de seuil de différence de temps, par :
la détermination qu'un résultat de détection des informations de diffusion de navigation est une diffusion de navigation anormale dans au moins l'un des cas suivants : les informations de différence d'emplacement de diffusion ne sont pas dans la plage de seuil de différence d'emplacement, et les informations de différence de temps de diffusion ne sont pas dans la plage de seuil de différence de temps.

9. Dispositif électronique, comprenant :
au moins un processeur ; et
une mémoire reliée en communication à l'au moins un processeur ;
dans lequel la mémoire stocke des instructions exécutables par l'au moins un processeur pour permettre à l'au moins processeur de réaliser le procédé de détection de diffusion de navigation selon l'une quelconque des revendications 1 à 4.

10. Support de stockage non transitoire lisible par ordinateur stockant des instructions d'ordinateur pour amener un ordinateur à réaliser le procédé de détection de diffusion de navigation selon l'une quelconque des revendications 1 à 4.

11. Programme informatique, dans lequel, lorsque le programme informatique est exécuté par un processeur, le procédé de détection de diffusion de navigation selon l'une quelconque des revendications 1 à 4 est réalisé.
